# EUROPEAN PATENT APPLICATION

(11) **EP 3 360 725 A1**
(43) Date of publication of application: **15.08.2018**
(21) Application number: 16853498.0
(22) Date of filing: 03.10.2016
(51) Int. Cl.: B60L 15/20, B60L 9/18

(54) **ELECTRIC VEHICLE CONTROL DEVICE, ELECTRIC VEHICLE CONTROL SYSTEM, AND ELECTRIC VEHICLE CONTROL METHOD**

(30) Priority: 08.10.2015 JP 2015200333
(71) Applicant: Hitachi Automotive Systems, Ltd., Hitachinaka-shi, Ibaraki 312-8503 (JP)
(72) Inventor: SUZUKI, Keisuke, Atsugi-shi Kanagawa 243-8510 (JP); KANEKO, Satoshi, Atsugi-shi Kanagawa 243-8510 (JP)
(74) Representative: Hoefer & Partner Patentanwälte mbB
(86) International application number: PCT/JP2016/079203
(87) International publication number: WO 2017/061344

(57) **Abstract**

An object of the present invention is to provide a control apparatus for an electric vehicle that can achieve an effect of eliminating or reducing a vibration regardless of a rotational direction of a wheel.

According to one embodiment of the present invention, a first vibration damping control torque calculated by a first calculation method based on a signal of a wheel speed sensor when an electric vehicle moves forward, or a second vibration damping control torque calculated by a second calculation method different from the first calculation method when the electric vehicle moves backward is selectively output.

## Description

### TECHNICAL FIELD

The present invention relates to a control apparatus, a control system, and a control method for an electric vehicle.

### BACKGROUND ART

A conventional control apparatus for an electric vehicle extracts a difference between a motor rotational speed and an average rotational speed of left and right drive wheels as a vibration component of a torsional vibration in a torque transmission system, and calculates a vibration damping control torque for canceling out the vibration component, thereby correcting a driver request drive torque. One example regarding the above-described technique is discussed in PTL 1.

### CITATION LIST

### PATENT LITERATURE

[PTL 1] Japanese Patent Application Public Disclosure No. 2002-152916

### SUMMARY OF INVENTION

### TECHNICAL PROBLEM

However, generally, a wheel speed sensor outputs an unsigned signal and cannot recognizably indicate a rotational direction, which raises a problem of making it impossible to correctly eliminate or reduce the vibration when the vehicle moves backward, thereby failing to achieve a sufficient effect of eliminating or reducing the vibration.

An object of the present invention is to provide a control apparatus for an electric vehicle that can achieve the effect of eliminating or reducing the vibration regardless of the rotational direction of the wheel.

### SOLUTION TO PROBLEM

According to one embodiment of the present invention, a first vibration damping control torque calculated by a first calculation method based on a signal of a wheel speed sensor when an electric vehicle moves forward, or a second vibration damping control torque calculated by a second calculation method different from the first calculation method when the electric vehicle moves backward is selectively output.

Therefore, the effect of eliminating or reducing the vibration can be achieved regardless of the rotational direction of the wheel.

### BRIEF DESCRIPTION OF DRAWINGS

Fig. 1 is a system diagram of an electric vehicle according to a first embodiment.
Fig. 2 is a control block diagram of a vehicle controller 6 according to the first embodiment.
Fig. 3 is a timing chart of a wheel speed, a drive torque, and a vibration detection value when a vibration damping control torque is calculated with use of a high-pass filter.
Fig. 4 is a timing chart illustrating an effect of eliminating or reducing a torsional vibration when the vibration damping control torque is calculated by a trailer wheel speed method according to the first embodiment.
Fig. 5 is a flowchart illustrating control processing performed by a selection portion according to the first embodiment.
Fig. 6 is a control block diagram illustrating switching control processing according to the first embodiment.
Fig. 7 is a timing chart illustrating the switching control processing according to the first embodiment.

### DESCRIPTION OF EMBODIMENTS

### [First Embodiment]

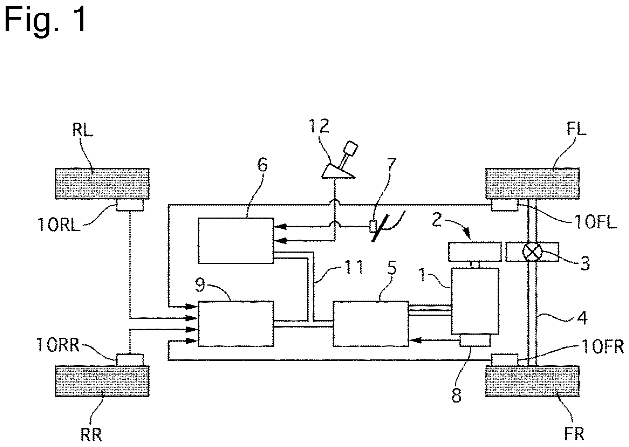

Fig. 1 is a system diagram of an electric vehicle according to a first embodiment. The electric vehicle according to the first embodiment is a front-wheel-drive vehicle (a two-wheel-drive vehicle) in which front wheels FR and FL are driven by an electric motor 1. A differential gear 3 is connected to the electric motor 1 via a speed reduction mechanism 2. A drive shaft 4 is connected to the differential gear 3. The front wheels FL and FR are connected to the drive shaft 4. Electric power is supplied from a not-illustrated high-voltage battery to the electric motor 1 via an inverter 5. Driving of the inverter 5 is controlled by a vehicle controller 6.

The electric vehicle includes a shift lever 12, an accelerator position sensor 7, and a resolver 8. The shift lever 12 outputs a range position signal indicating a running mode of the vehicle. The accelerator position sensor 7 outputs an accelerator position signal. The resolver 8 outputs a motor rotational speed signal including a rotational direction of the electric motor 1. The vehicle controller 6 includes a first reception portion, which receives the range position signal from the shift lever 12 and the accelerator position signal from the accelerator position sensor 7. Further, the vehicle controller 6 includes a second reception portion, which receives the motor rotational speed signal from the resolver 8 via the inverter 5. The shift lever 12 is operated by a driver, and outputs the range position signal indicating a parking range (hereinafter referred to as a P range) when the vehicle is parked, a neutral range (hereinafter referred to as an N range) when no power is transmitted, a drive range (hereinafter referred to as a D range) when the vehicle moves forward, and a reverse range (hereinafter referred to as an R range) when the vehicle moves backward. The phrase "a position of a shift lever is placed at a reverse position" set forth in the claims means that the shift lever 12 outputs the R range positional signal regardless of whether the lever position of the shift lever 12 and a display position indicating the R range position correspond to each other.

The inverter 5 receives wheel speeds of rear wheels RL and RR (a left trailer wheel speed and a right trailer wheel speed) via a brake controller 9. The brake controller 9 is connected to wheel speed sensors 10FL, 10FR, 10RL, and 10RR (hereinafter also referred to as simply 10) mounted on the individual wheels, and receives a rotational speed signal of each of the wheels. The wheel speed sensors 10 each detect a wheel speed from a cycle of an electromagnetic pulse, and therefore cannot detect a rotational direction. The brake controller 9 adjusts brake fluid to be supplied to a brake unit of each of the wheels to control a braking torque of each of the wheels based on a brake operation amount input by the driver, each of the wheel speeds, and/or the like. Information communication between the inverter 5, the vehicle controller 6, and the brake controller 9 is carried out via a CAN communication line (a communication apparatus) 11. The vehicle controller 6 calculates a drive torque instruction value directed to the electric motor 1 based on the accelerator position and the like, and drives the inverter 5 according to the drive torque instruction value.

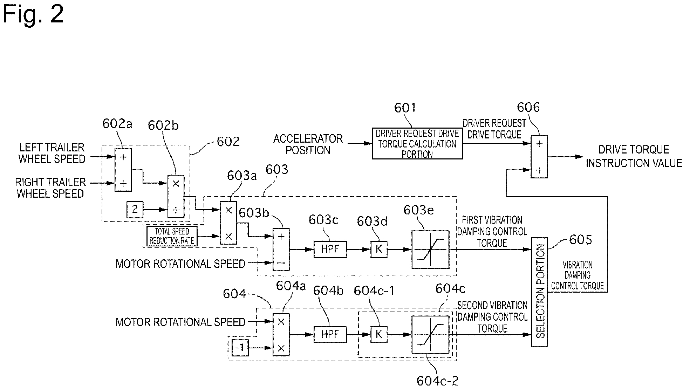

Fig. 2 is a control block diagram of the vehicle controller 6 according to the first embodiment.

A driver request drive torque calculation portion 601 calculates a driver request drive torque based on the accelerator position. The driver request drive torque has a value increasing as the accelerator position increases.

A vehicle body speed estimation portion 602 estimates a vehicle body speed from the left and right trailer wheel speeds detected by the rear left wheel speed sensor (a trailer wheel rotational speed calculation portion) 10RL and the rear right wheel speed sensor (the trailer wheel rotational speed calculation portion) 10RR. An addition portion 602a adds the left and right trailer wheel speeds. A division portion 602b outputs a value acquired by dividing an output of the addition portion 602a by 2, i.e., an average value of the left and right trailer wheel speeds as the vehicle body speed.

A first vibration damping control torque calculation portion 603 calculates a first vibration damping control torque based on the vehicle body speed estimated by the vehicle body speed estimation portion 602 and the motor rotational speed detected by the resolver 8. A multiplication portion 603a multiplies the vehicle body speed by a total speed reduction rate (a speed reduction rate of the speed reduction mechanism 2 × a speed reduction rate of the differential gear 3). A subtraction portion 603b extracts a vibration component contained in the motor rotational speed by subtracting the motor rotational speed from an output of the multiplication portion 603a. A high-pass filter 603c gradually subtracts a steady-state deviation (a deviation due to a difference between a calculated value and an actual value of a tire dynamic radius) component from an output of the subtraction portion 603b. A cutoff frequency of the high-pass filter 603c is set to a value that allows a wheel slip to be detected (for example, lower than 1 Hz). A gain multiplication portion 603d outputs, as the first vibration damping control torque, a value acquired by multiplying a vibration component that has passed through the high-pass filter 603c by a predetermined control gain K. A limiter processing portion 603e limits upper and lower limit values of the first vibration damping control torque within a certain range.

A second vibration damping control torque calculation portion 604 calculates a second vibration damping control torque based on the motor rotational speed. A multiplication portion 604a inverts a sign by multiplying the motor rotational speed by -1. A high-pass filter 604b gradually subtracts a vibration component having a predetermined or lower frequency from an output of the multiplier 604a. A cutoff frequency of the high-pass filter 604b is set to such a characteristic that a frequency of a torsional vibration on a high µ road (for example, approximately 5 to 9 Hz) and a frequency of a vibration due to sudden acceleration (for example, approximately 1 to 4 Hz) can be separated from each other, i.e., a value capable of gradually subtracting a sudden acceleration component contained in the motor rotational speed on the high µ road. A high-pass filter method-based vibration damping control torque calculation portion 604c calculates the second vibration damping control torque based on the vibration component that has passed through the high-pass filter 604b. A gain multiplication portion 604c-1 outputs, K as the second vibration damping control torque, a value calculated by multiplying the vibration component that has passed through the high-pass filter 604b by a predetermined control gain. A limiter processing portion 604c-2 limits upper and lower limit values of the second vibration damping control torque within a predetermined range.

A selection portion 605 selects one of the first vibration damping control torque calculated by the first vibration damping control torque calculation portion 603 and the second vibration damping control torque calculated by the second vibration damping control torque calculation portion 604, and outputs the selected torque as the vibration damping control torque. The selection portion 605 selects one of the first vibration damping control torque and the second vibration damping control torque according to the range position of the shift lever 12 and the motor rotational speed. The selection portion 605 always selects the first vibration damping control torque when the vehicle is started up with the aim of simplifying the control.

A drive torque instruction value calculation portion 606 calculates the drive torque instruction value by adding the driver request drive torque calculated by the driver request drive torque calculation portion 601 and the vibration damping control torque output from the selection portion 605.

### [Improvement of Effect of Eliminating or Reducing Torsional Vibration]

When a motor torque is raised in a stepwise manner at the time of sudden acceleration in the electric vehicle, a torsional vibration occurs in a torque transmission system due to a repetition of a torsion and a release of the drive shaft. The electric motor is highly responsive to the torque compared to an engine, and therefore leads to a reduction in ride comfort and an increase in a vibration/noise level upon transmission of the torsional vibration to the vehicle body via a mount, especially when this vibration is superimposed on a resonant frequency of the vehicle body. Therefore, the conventional electric motor extracts, as the vibration component of the torsional vibration, the difference between the motor rotational speed and the average rotational speed of the left and right drive wheels (a drive wheel speed), and calculates the vibration damping control torque for canceling out this vibration component, thereby correcting the driver request drive torque.

However, calculating the vibration damping control torque from the difference between the motor rotational speed and the drive wheel speed results in a failure to calculate an appropriate vibration damping control torque with respect to the torsional vibration especially while the vehicle is running on a low µ road, making it impossible to achieve a sufficient effect of eliminating or reducing the vibration. The reason therefor will be described below.

Generally, the rotational speed of each of the wheels is detected by the wheel speed sensor and are input to the brake controller, which means that the controller controlling the electric motor acquires the drive wheel speed signal from the brake controller via the CAN communication line. Therefore, a communication delay from the actual drive wheel speed (the value detected by the sensor) occurs in the drive wheel speed acquired by the controller. On the other hand, no communication delay occurs in the motor rotational speed because the motor rotational speed is directly input from the resolver to the controller. Then, when the wheel slips on the low µ road, a mass of the vehicle is separated from apparent inertia of the tire and therefore the apparent tire inertia reduces. Therefore, a frequency of the torsional vibration on the low µ road (approximately 10 to 20 Hz) is higher than a frequency of the torsional vibration on a high µ road (approximately 5 to 9 Hz). Therefore, calculating the vibration damping braking torque while the vehicle is running on the low µ road makes the vibration of the motor rotational speed and the vibration of the drive wheel speed out of phase with each other, leading to a calculation of an inappropriate (out-of-phase) vibration damping braking torque.

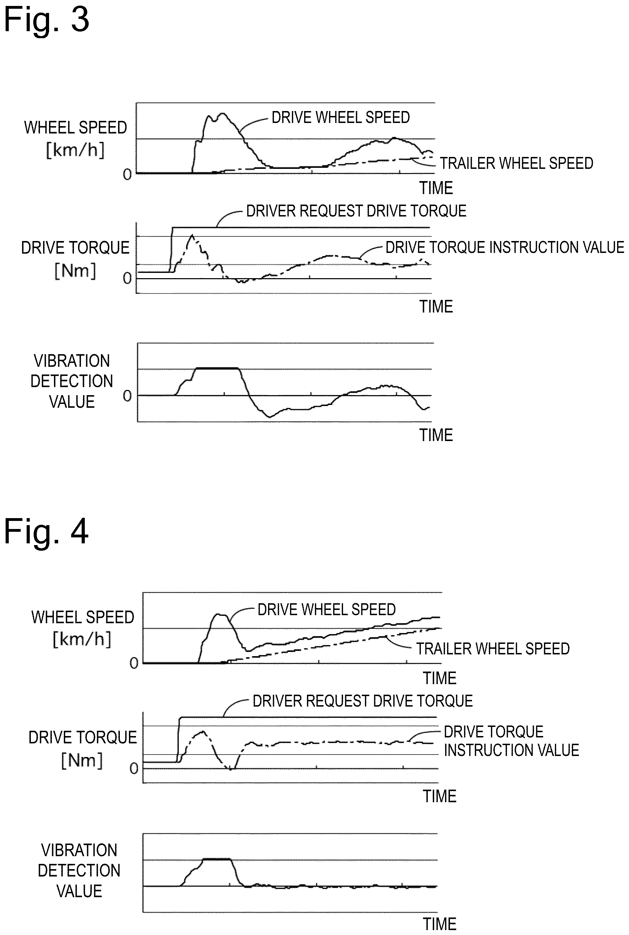

Known methods for avoiding an influence of the above-described communication delay include a method that directly inputs the drive wheel speed from the wheel speed sensor without the intervention of the CAN communication line, and a method that calculates the vibration damping control torque from the motor rotational speed with use of a high-pass filter. However, the former method raises a problem of a cost increase such as an addition of a circuit. Further, the latter method leads to deterioration of a slip control performance because a vibration damping control torque out of phase is calculated at an initial stage of the slip due to the slip of the drive wheel. Fig. 3 is a timing chart of the wheel speed, the drive torque, and a vibration detection value when the vibration damping control torque is calculated with use of the high-pass filter. The method using the high-pass filter cannot distinguish the slip of the drive wheel (= an increase in the motor speed) and the sudden acceleration from each other, and therefore calculates the vibration damping control torque out of phase with the slip of the drive wheel at the initial stage of the slip. Therefore, the motor rotational speed and the drive wheel speed are not stabilized, so that the slip control performance is deteriorated.

On the other hand, in the first embodiment, the first vibration damping control torque calculation portion 603 calculates the first vibration damping control torque based on the difference between the motor rotational speed and the vehicle body speed estimated from the left and right trailer wheel speeds. The vehicle body speed does not vibrate regardless of the slip state of the wheel, and therefore is not out of phase with the motor rotational speed. Further, the first embodiment allows the acceleration component and the slip of the drive wheel to be distinguished from each other by subtracting the vehicle body speed from the motor rotational speed. Therefore, the first embodiment allows an appropriate first vibration damping control torque to be calculated with respect to the torsional vibration regardless of the slip state of the wheel, thereby succeeding in improving the effect of eliminating or reducing the torsional vibration. Fig. 4 is a timing chart illustrating the effect of eliminating or reducing the torsional vibration when the vibration damping control torque is calculated by the trailer wheel speed method according to the first embodiment. The first embodiment allows the vibration to be detected without being out of phase with the slip of the drive wheel, and therefore stabilizes the motor rotational speed and the drive wheel speed, thus exhibiting an excellent performance of converging the slip without impeding the slip control. Further, the first embodiment is unaffected by the influence of the communication delay, and therefore can be applied to a conventional system that introduces the left and right trailer wheel speeds from the brake controller 9 via the CAN communication line. Therefore, the first embodiment does not require the addition of the circuit or the like for directly inputting the trailer wheel speed from the wheel speed sensor 10, thereby succeeding in preventing or cutting down the complication of the system and the cost increase.

Now, a reason for selecting any one of the first vibration damping control torque and the second vibration damping control torque will be described. As described above, the signal output from the wheel speed sensor 10 is a pulse signal, and the wheel speed sensor 10 outputs a positive signal both when the vehicle moves forward and when the vehicle moves backward. Therefore, using the first vibration damping control torque based on the left and right trailer wheel speeds when the vehicle moves backward unintentionally leads to a calculation of a difference between the left and right trailer wheel speeds that are actually negative values and the motor rotational speed, thus resulting in a failure to calculate the appropriate first vibration damping control torque. Therefore, the first embodiment is configured to select the second vibration damping control torque that does not use the value of the wheel speed sensor 10 when the vehicle is considered to move backward (when the R range is selected or when the vehicle is rolled back by moving backward due to an influence of a sloped road even with the D range selected).

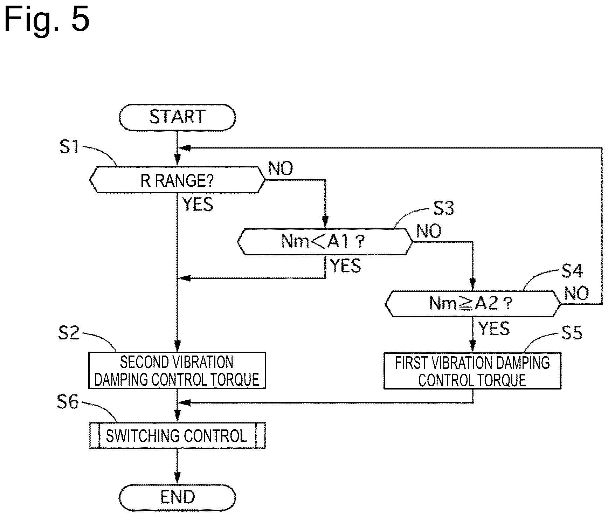

Fig. 5 is a flowchart illustrating control processing performed by the selection portion according to the first embodiment.

In step S1, the selection portion 605 determines whether the range positional signal is the R range. If the R range is selected, the selection portion 605 determines that the vehicle moves backward and then the processing proceeds to step S2.

In step S2, the selection portion 605 selects the second vibration damping control torque.

In step S3, the selection portion 605 determines whether the motor rotational speed Nm is lower than a predetermined rotational speed A1. If the motor rotational speed Nm is lower than the A1, the processing proceeds to step S2, in which the selection portion 705 selects the second vibration damping control torque. If the motor rotational speed Nm is the A1 or higher, the processing proceeds to step S4. Now, the predetermined rotational speed A1 is a predetermined speed indicating the backward movement, and is, for example, -100 rpm. The predetermined rotational speed A1 is not set to 0 rpm but is set to a negative value for the purpose of avoiding deterioration of controllability due to a frequent repetition of the switching between the first vibration damping control torque and the second vibration damping control torque (hereinafter referred to as control hunting) because the motor rotational speed Nm may alternate between a negative value and a positive value around 0 rpm due to a vibration immediately after the vehicle is stopped.

In step S4, the selection portion 605 determines whether the motor rotational speed Nm is a predetermined rotational speed A2 or higher. If the motor rotational speed Nm is the A2 or higher, the processing proceeds to step S5, in which the selection portion 605 selects the first vibration damping control torque. If the motor rotational speed Nm is lower than the A2, the processing returns to step S1. Now, the predetermined rotational speed A2 is a predetermined speed at which control hunting can be avoided, and is, for example, 100 rpm. As a result, the first embodiment can provide hysteresis to the switching between the first vibration damping control torque and the second vibration damping control torque, and secures a stable vibration damping performance by preventing or reducing the control hunting.

In step S6, the vehicle controller 6 performs switching control of smoothly switching the vibration damping control torque when switching the vibration damping control torque. In the following description, the switching control will be described in detail.

### (Regarding Switching Control Processing)

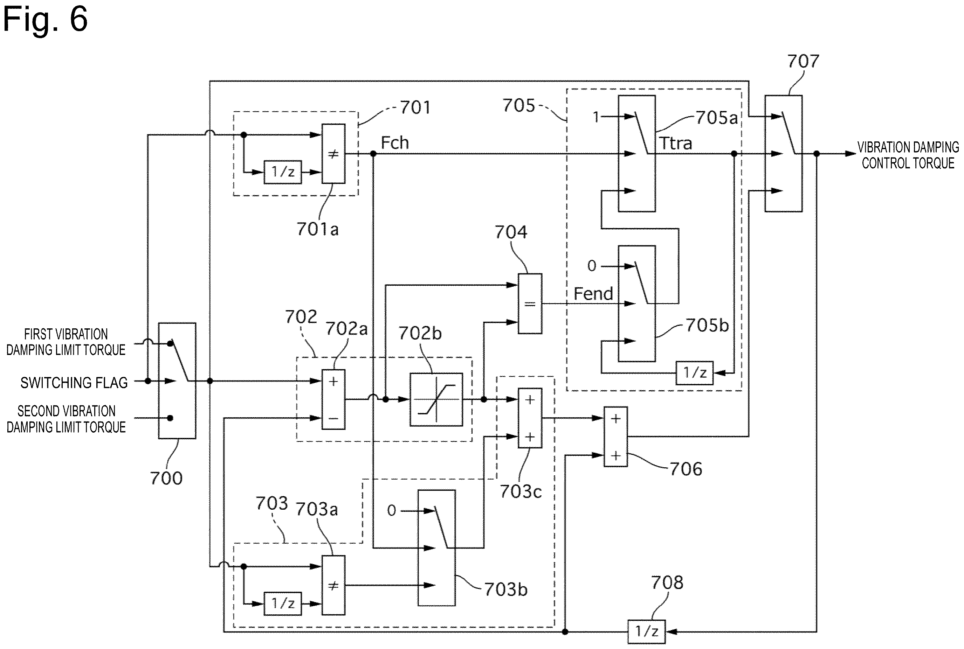

Fig. 6 is a control block diagram illustrating the switching control processing according to the first embodiment. In Fig. 6, (1/Z) indicates a previous value. As a switching flag Fmm, Fmm = F12 is output when the vibration damping control torque is switched from the first vibration damping control torque to the second vibration damping control torque, and Fmm = F21 is output when the vibration damping control torque is switched from the second vibration damping control torque to the first vibration damping control torque.

A torque switching portion 700 outputs a post-switching vibration damping control torque according to the value of the switching flag Fmm. In other words, the second vibration damping control torque is the post-switching vibration damping control torque when the switching flag Fmm is Fmm = F12, and the first vibration damping control torque is the post-switching vibration damping control torque when the switching flag Fmm is Fmm = F21.

A transition processing start determination portion 701 determines whether the value of the switching flag Fmm does not match the previous value by a determination portion 701a, and outputs Fch = ON when the value of the switching flag Fmm does not match the previous value (when the switching flag Fmm is switched from F12 to F21 or F21 to F12), and otherwise outputs Fch = OFF.

A transition speed determination portion 702 calculates, by a first difference calculation portion 702a, a first difference, which is a difference between the post-switching vibration damping control torque and a previous value of the vibration damping control torque (hereinafter referred to as a previous vibration damping control torque) currently output by a previous value output portion 708. Next, a limitation portion 702b outputs the first difference without limiting it if the first difference does not exceed a preset maximum limit value or a preset minimum limit value of a change amount, and outputs the limit value if the first difference exceeds the limit value. By this operation, the transition speed determination portion 702 sets a transition speed (an allowable change amount per unit time during the transition) when the vibration damping control torque transitions from one vibration damping control torque to the other vibration damping control torque, at the time of the switching of the vibration damping control torque.

An ongoing transition vibration damping performance compensation portion 703 calculates, by a second difference calculation portion 703a, a second difference, which is a difference between the post-switching vibration damping control torque and the previous value of the post-switching vibration damping control torque. Next, the ongoing transition vibration damping performance compensation portion 703 outputs, by a compensation determination portion 703b, the second difference if Fch is ON and outputs 0 if Fch is OFF. Then, the ongoing transition vibration damping performance compensation portion 703 outputs, by an addition portion 703c, a third difference, which is a sum of the value output from the transition speed determination portion 702 and the second difference. By this operation, the ongoing transition vibration damping performance compensation portion 703 compensates for a torque corresponding to the change in the post-switching vibration damping control torque, thereby securing the vibration damping performance, even before the vibration damping control torque is completely switched to the post-switching vibration damping control torque.

A transition processing end determination portion 704 determines whether the first difference and the first difference after the limitation (any of the limit value and the first difference) match each other. Then, if they match each other, the transition processing end determination portion 704 determines that the vibration damping control torque catches up with the post-switching vibration damping control torque and then outputs Fend = ON since the first difference is smaller than the limit value. If they do not match each other, the transition processing end determination portion 704 determines that the vibration damping control torque is in a limited state and does not yet catch up with the post-switching vibration damping control torque and then outputs Fend = OFF.

A transition processing ongoing determination portion 705 outputs a transition processing ongoing flag Ftra = 1 when Fch is OFF and outputs a result of a determination made by a second determination portion 705b, which will be described below, when Fch is ON, by a first determination portion 705a. The second determination portion 705b outputs 0 when Fend is ON and outputs a previous value of the value output from the first determination portion 705a when Fend is OFF. In other words, the first determination portion 705a first outputs Ftra = 1 when a request to switch the vibration damping control torque is output, and then switches the output to the result of the determination made by the second determination portion 705b upon an end of the switching request. At this time, while Fend is OFF, the result of the determination made by the second determination portion 705b is kept at 1, and therefore Ftra = 1 is continuously output from the first determination portion 705a. After that, when the result of the determination made by the second determination portion 705b is changed to 0, 0 is also output to the first determination portion 705a, and therefore Ftr = 0 is output from the first determination portion 705a

An ongoing transition vibration damping control torque calculation portion 706 adds the previous value of the vibration damping control torque to the third difference. By this operation, the ongoing transition vibration damping control torque calculation portion 706 can output the vibration damping control torque during the transition according to a managed transition speed while compensating for the torque corresponding to the change in the post-switching vibration damping control torque, even during the transition according to the switching of the vibration damping control torque.

A final output determination portion 707 outputs any of the post-switching vibration damping control torque and the vibration damping control torque during the transition based on the result of the determination made by the transition processing ongoing determination portion 705.

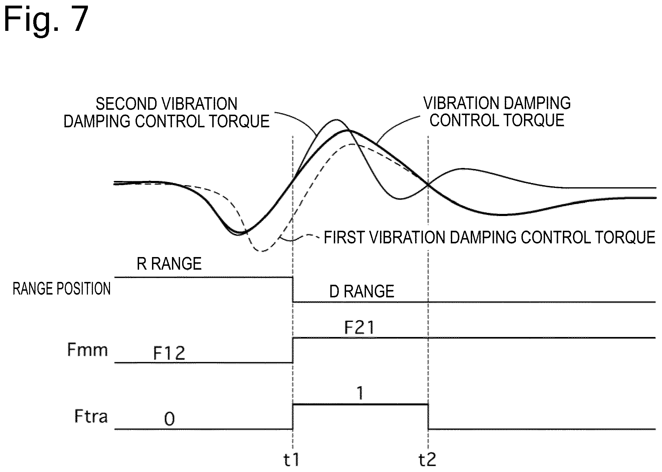

Fig. 7 is a timing chart illustrating the switching control processing according to the first embodiment. This is a state in which the vehicle is first running with the shift lever set to the R range, and the second vibration damping control torque is selected.

At time t1, when the driver operates the shift lever 12 to perform a shift operation from the R range to the D range, and the switching flag Fmm is switched from F12 to F21, the transition processing ongoing flag Ftra changes from 0 to 1. Then, a value gradually approaching from the second vibration damping control torque to the first vibration damping control torque is output as the vibration damping control torque.

At time t2, when the vibration damping control torque and the first vibration damping control torque match each other, the transition processing ongoing flag Ftra changes from 1 to 0, and the first vibration damping control torque is output as the vibration damping control torque. As a result, the switching is fully completed.

In this manner, the first embodiment can realize the switching that does not cause the driver to feel uncomfortable while securing the vibration damping performance by gradually approaching the vibration damping control torque after the switching while taking into consideration the torque corresponding to the change in the vibration damping control torque after the switching, even if there is a deviation between the first vibration damping control torque and the second vibration damping control torque when the vibration damping control torque is switched.

The first embodiment brings about the following advantageous effects.
(1) The control apparatus for the electric vehicle configured to drive the wheel by the electric motor 1 includes: the selection portion 605 (a vibration damping control torque calculation portion) configured to selectively output the first vibration damping control torque calculated by the first vibration damping control torque calculation portion 603 (a first calculation method) based on the signal of the wheel speed sensor 10 when the electric vehicle moves forward, or the second vibration damping control torque calculated by the second vibration damping control torque calculation portion 604 (a second calculation method) different from the first vibration damping control torque calculation portion 603 when the electric vehicle moves backward; and the drive torque instruction value calculation portion 606 (a motor torque instruction calculation portion) configured to calculate the motor torque instruction for driving the electric motor 1 based on the requested drive torque and the vibration damping control torque.
   Therefore, the first embodiment can improve the effect of eliminating or reducing the vibration regardless of the rotational direction of the wheel.
(2) In the control apparatus for the electric vehicle described in the above-described item (1), the second vibration damping control torque calculation portion 604 uses the signal other than the signal of the wheel speed sensor 10. Therefore, the first embodiment can improve the effect of eliminating or reducing the vibration when the vehicle moves backward.
(3) In the control apparatus for the electric vehicle described in the above-described item (2), the selection portion 605 uses the second vibration damping control torque calculated by the second vibration damping control torque calculation portion 604 when the position of the shift lever (shift-position) of the electric vehicle is placed at the R range (a reverse position).
   More specifically, when the R range is selected, the electric vehicle highly likely moves backward, so that the first embodiment can accurately detect the backward movement.
(4) In the control apparatus for the electric vehicle described in the above-described item (3), the selection portion 605 selects the second vibration damping control torque when the motor rotational speed of the electric motor 1 is lower than the predetermined rotational speed A1 (a first threshold value) indicating the backward movement.
   Therefore, the first embodiment can realize the stable vibration damping control without the vibration damping control torque unnecessarily switched to the second vibration damping control torque even when a negative rotation is detected due to the motor vibration immediately after the vehicle is stopped.
(5) In the control apparatus for the electric vehicle described in the above-described item (4), the selection portion 605 selects the first vibration damping control torque when the motor rotational speed Nm matches or exceeds the predetermined rotational speed A2 (a second threshold value) higher than the predetermined rotational speed A1 while the second vibration damping control torque is selected.
   Therefore, the first embodiment can realize the stable vibration damping control without the vibration damping control torque frequently changed.
(6) In the control apparatus for the electric vehicle described in the above-described item (5), the signal of the wheel speed sensor 10 is based on the rotational speed of the trailer wheel side.
   Therefore, the first embodiment can improve the effect of eliminating or reducing the torsional vibration.
(7) In the control apparatus for the electric vehicle described in the above-described item (1), the operation of switching the vibration damping control torque between the first vibration damping control torque and the second vibration damping control torque is performed so as to gradually approach the vibration damping control torque after the switching.
   Therefore, the first embodiment can prevent or reduce a sudden change accompanying the switching of the vibration damping control torque.
(8) In the control apparatus for the electric vehicle described in the above-described item (7), when the operation of switching the vibration damping control torque is performed so as to approach the vibration damping control torque after the switching, the torque according to the change in the vibration damping control torque after the switching is compensated for.
   Therefore, the first embodiment can compensate for the torque corresponding to the change in the vibration damping control torque after the switching and thus secure the vibration damping performance even before the vibration damping control torque is completely switched to the vibration damping control torque after the switching.
(9) The control system for the electric vehicle configured to drive the wheel by the electric motor 1 includes: the wheel speed sensor 10 configured to detect the wheel speed; the selection portion 605 configured to selectively output the first vibration damping control torque calculated by the first vibration damping control torque calculation portion 603 based on the signal of the wheel speed sensor 10 when the electric vehicle moves forward, or the second vibration damping control torque calculated by the second vibration damping control torque calculation portion 604 different from the first vibration damping control torque calculation portion 603 when the electric vehicle moves backward; the driver request drive torque calculation portion 601 (a requested drive torque calculation portion) configured to calculate the drive torque requested to the electric vehicle; and the drive torque instruction value calculation portion 606 (a motor torque instruction calculation portion) configured to calculate the motor torque instruction for driving the electric motor based on the drive torque and the vibration damping control torque.
   Therefore, the first embodiment can provide the system that can improve the effect of eliminating or reducing the vibration regardless of the rotational direction of the wheel.
(10) In the control system for the electric vehicle described in the above-described item (9), the selection portion 605 uses the second vibration damping control torque calculated by the second vibration damping control torque calculation portion 604 when the position of the shift lever (shift-position) of the electric vehicle is placed at the R range (a reverse position).
   More specifically, when the R range is selected, the electric vehicle highly likely moves backward, so that the first embodiment can accurately detect the backward movement.
(11) In the control apparatus for the electric vehicle described in the above-described item (10), the selection portion 605 selects the second vibration damping control torque when the motor rotational speed of the electric motor 1 is lower than the predetermined rotational speed A1 (a first threshold value) indicating the backward movement.
   Therefore, the first embodiment can realize the stable vibration damping control without the vibration damping control torque unnecessarily switched to the second vibration damping control torque even when a negative rotation is detected due to the motor vibration immediately after the vehicle is stopped.
(12) In the control apparatus for the electric vehicle described in the above-described item (11), the selection portion 605 selects the first vibration damping control torque when the motor rotational speed Nm matches or exceeds the predetermined rotational speed A2 (a second threshold value) higher than the predetermined rotational speed A1 while the second vibration damping control torque is selected.
   Therefore, the first embodiment can realize the stable vibration damping control without the vibration damping control torque frequently changed.
(13) The method for controlling the electric vehicle configured to drive the wheel by the electric motor 1 includes: carrying out steps S1 to S5 (a vibration damping control torque calculation) of selectively outputting the first vibration damping control torque calculated by the first vibration damping control torque calculation portion 603 based on the signal of the wheel speed sensor 10 when the electric vehicle moves forward, or the second vibration damping control torque calculated by the second vibration damping control torque calculation portion 604 different from the first vibration damping control torque portion 603 when the electric vehicle moves backward; and carrying out step S6 (a motor torque instruction calculation) of calculating the motor torque instruction for driving the electric motor 1 based on the drive torque requested to the electric vehicle and the vibration damping control torque.
   Therefore, the first embodiment can improve the effect of eliminating or reducing the vibration regardless of the rotational direction of the wheel.
(14) In the control system for the electric vehicle described in the above-described item (13), in step S1, the second vibration damping control torque calculated by the second vibration damping control torque calculation portion 604 is used when the position of the shift lever (shift-position) of the electric vehicle is placed at the R range (a reverse position).
   More specifically, when the R range is selected, the electric vehicle highly likely moves backward, so that the first embodiment can accurately detect the backward movement.
(15) In the control apparatus for the electric vehicle described in the above-described item (14), in step S3, the second vibration damping control torque is selected when the motor rotational speed of the electric motor 1 is lower than the predetermined rotational speed A1 (a first threshold value) indicating the backward movement.
   Therefore, the first embodiment can realize the stable vibration damping control without the vibration damping control torque unnecessarily switched to the second vibration damping control torque even when a negative rotation is detected due to the motor vibration immediately after the vehicle is stopped.
(16) In the control apparatus for the electric vehicle described in the above-described item (15), in step S4, the first vibration damping control torque is selected when the motor rotational speed Nm matches or exceeds the predetermined rotational speed A2 (a second threshold value) higher than the predetermined rotational speed A1 while the second vibration damping control torque is selected.
   Therefore, the first embodiment can realize the stable vibration damping control without the vibration damping control torque frequently changed.

Having described an embodiment for implementing the present invention based on the exemplary embodiment thereof, the specific configuration of the present invention is not limited to the configuration indicated in the exemplary embodiment, and the present invention also includes a design modification and the like thereof made within a range that does not depart from the spirit of the present invention. Further, the individual components described in the claims and the specification can be arbitrarily combined or omitted within a range that allows them to remain capable of achieving at least a part of the above-described objects or producing at least a part of the above-described advantageous effects.

For example, in the exemplary embodiment, the vehicle has been described citing the electric vehicle as an example, but the present invention can also be applied even to a hybrid vehicle including both the engine and the electric motor. Further, in the exemplary embodiment, the first vibration damping control torque is calculated based on the rotational speed of the trailer wheel side when being calculated, but may be calculated based on the rotational speed of the drive wheel side.
(17) In the control apparatus for the electric vehicle described in the above-described item (5), the signal of the wheel speed sensor 10 is based on the rotational speed of the drive wheel side. This configuration can effectively eliminate or reduce the torsional vibration between the electric motor 1 and the drive wheel.

The present application claims priority to Japanese Patent Application No. 2015-200333 filed on October 8, 2015. The entire disclosure of Japanese Patent Application No. 2015-200333 filed on October 8, 2015 including the specification, the claims, the drawings, and the abstract is incorporated herein by reference in its entirety.

### REFERENCE SIGN LIST

FL, FR front wheel (drive wheel)
RL, RR rear wheel (trailer wheel)
1 electric motor
2 speed reduction mechanism
3 differential gear
4 drive shaft
5 inverter
6 vehicle controller
7 accelerator position sensor
8 resolver
9 brake controller
10 wheel speed sensor
11 CAN communication line (communication apparatus)
601 driver request drive torque calculation portion
602 vehicle body speed estimation portion
603 first vibration damping control torque calculation portion
604 second vibration damping control torque calculation portion
605 selection portion
606 drive torque instruction value calculation portion

## Claims

1. A control apparatus for an electric vehicle configured to drive a wheel by an electric motor, the control apparatus comprising:
a vibration damping control torque calculation portion configured to selectively output a first vibration damping control torque calculated by a first calculation method based on a signal of a wheel speed sensor when the electric vehicle moves forward, or a second vibration damping control torque calculated by a second calculation method different from the first calculation method when the electric vehicle moves backward; and
a motor torque instruction calculation portion configured to calculate a motor torque instruction for driving the electric motor, based on a requested drive torque and the selectively output first vibration damping control torque or second vibration damping control torque.

2. The control apparatus for the electric vehicle according to claim 1, wherein the second calculation method uses a signal other than the signal of the wheel speed sensor.

3. The control apparatus for the electric vehicle according to claim 2, wherein the vibration damping control torque calculation portion outputs the second vibration damping control torque when a shift-position of the electric vehicle is placed at a reverse position.

4. The control apparatus for the electric vehicle according to claim 3, wherein the vibration damping control torque calculation portion outputs the second vibration damping control torque when a rotational speed of the electric motor is lower than a first threshold value indicating a backward movement of the electric vehicle.

5. The control apparatus for the electric vehicle according to claim 4, wherein the vibration damping control torque calculation portion outputs the first vibration damping control torque instead of the second vibration damping control torque when the rotational speed of the electric motor matches or exceeds a second threshold value higher than the first threshold value while the second vibration damping control torque is output.

6. The control apparatus for the electric vehicle according to claim 5, wherein the signal of the wheel speed sensor indicates a rotational speed of a trailer wheel.

7. The control apparatus for the electric vehicle according to claim 5, wherein the signal of the wheel speed sensor indicates a rotational speed of a drive wheel.

8. The control apparatus for the electric vehicle according to claim 1, wherein an operation of switching the vibration damping control torque between the first vibration damping control torque and the second vibration damping control torque is performed in such a manner that the vibration damping control torque before the switching gradually approaches the vibration damping control torque after the switching.

9. The control apparatus for the electric vehicle according to claim 8, wherein the switching operation is performed so as to cause the vibration damping control torque before the switching to gradually approach the vibration damping control torque after the switching while compensating for a torque corresponding to a change in the vibration damping control torque after the switching.

10. A control system for an electric vehicle configured to drive a wheel by an electric motor, the control system comprising:
a wheel speed sensor configured to detect a wheel speed;
a vibration damping control torque calculation portion configured to selectively output a first vibration damping control torque calculated by a first calculation method based on a signal of the wheel speed sensor when the electric vehicle moves forward, or a second vibration damping control torque calculated by a second calculation method different from the first calculation method when the electric vehicle moves backward;
a requested drive torque calculation portion configured to calculate a drive torque requested to the electric vehicle; and
a motor torque instruction calculation portion configured to calculate a motor torque instruction for driving the electric motor, based on the drive torque and the selectively output first vibration damping control torque or second vibration damping control torque.

11. The control system for the electric vehicle according to claim 10, wherein the second calculation method uses a signal other than the signal of the wheel speed sensor.

12. The control system for the electric vehicle according to claim 11, wherein the vibration damping control torque calculation portion outputs the second vibration damping control torque when a shift-position of the electric vehicle is placed at a reverse position.

13. The control system for the electric vehicle according to claim 12, wherein the vibration damping control torque calculation portion outputs the second vibration damping control torque when a rotational speed of the electric motor is lower than a first threshold value indicating a backward movement of the electric vehicle.

14. The control system for the electric vehicle according to claim 13, wherein the vibration damping control torque calculation portion outputs the first vibration damping control torque instead of the second vibration damping control torque when the rotational speed of the electric motor matches or exceeds a second threshold value higher than the first threshold value while the second vibration damping control torque is output.

15. A method for controlling an electric vehicle configured to drive a wheel by an electric motor, the method comprising:
carrying out a vibration damping control torque calculation of selectively outputting a first vibration damping control torque calculated by a first calculation method based on a signal of a wheel speed sensor when the electric vehicle moves forward, or a second vibration damping control torque calculated by a second calculation method different from the first calculation method when the electric vehicle moves backward; and
carrying out a motor torque instruction calculation of calculating a motor torque instruction for driving the electric motor, based on a drive torque requested to the electric vehicle and the selectively output first vibration damping control torque or second vibration damping control torque.

16. The method for controlling the electric vehicle according to claim 15, wherein the second calculation method uses a signal other than the signal of the wheel speed sensor.

17. The method for controlling the electric vehicle according to claim 16, wherein in the vibration damping control torque calculation, the second vibration damping control torque is output when a shift-position of the electric vehicle is placed at a reverse position.

18. The method for controlling the electric vehicle according to claim 17, wherein in the vibration damping control torque calculation, the second vibration damping control torque is output when a rotational speed of the electric motor is lower than a first threshold value indicating a backward movement of the electric vehicle.

19. The method for controlling the electric vehicle according to claim 18, wherein in the vibration damping control torque calculation, the first vibration damping control torque is output instead of the second vibration damping control torque when the rotational speed of the electric motor matches or exceeds a second threshold value higher than the first threshold value while the second vibration damping control torque is output.
